# EUROPÄISCHE PATENTSCHRIFT

(11) **EP 0 763 177 B1**
(45) Veröffentlichungstag und Bekanntmachung des Hinweises auf die Patenterteilung: **30.12.1998**
(21) Anmeldenummer: 95923213.3
(22) Anmeldetag: 31.05.1995
(51) Int. Cl.: F16M 13/00

(54) **HALTEVORRICHTUNG FÜR EIN NICHT IDEAL STARRES WERKSTÜCK**
HOLDER FOR WORKPIECES WITH A NON-IDEAL RIGIDITY
DISPOSITIF DE RETENUE POUR PIECES D'UNE RIGIDITE NON IDEALE

(30) Priorität: 03.06.1994 DE 4419356
(43) Veröffentlichungstag der Anmeldung: 19.03.1997
(73) Patentinhaber: Fahrion, Otmar, 70806 Kornwestheim (DE)
(72) Erfinder: Fahrion, Otmar, 70806 Kornwestheim (DE)
(74) Vertreter: Ostertag, Reinhard
(86) Internationale Anmeldenummer: EP9502055
(87) Internationale Veröffentlichungsnummer: WO9533954

(56) Entgegenhaltungen:
- DE-A- 2 220 496
- DE-B- 1 174 348
- FR-A- 715 316
- FR-A- 2 083 018

## Beschreibung

Die Erfindung betrifft eine Haltevorrichtung zur Unterstützung eines langen Werkstücks bei der Bearbeitung gemäß dem Oberbegriff des Anspruches 1.

Ein derartiges Werkstück ist insoweit nicht ideal starr, als es zwar eine hohe Steifigkeit und Formstabilität aufweist, so daß es nicht im eigentlichen Sprachgebrauch biegbar oder verformbar ist, vielmehr für viele Zwecke als starrer Körper angesehen werden kann, jedoch unter speziellen Bedingungen doch soweit von einem ideal starren Körper abweicht, daß dem Rechnung getragen werden muß. Ein Beispiel für ein derartiges nicht ideal starres Werkstück ist z. B. eine Kurbelwelle für einen Schiffsdiesel. Derartige Kurbelwellen haben typischerweise Längen von 1,5 bis 11 m bei Zapfendurchmessern von bis zu 50 cm. Diese Wellen hängen aufgrund ihres Eigengewichtes trotz ihrer starken Querschnitte durch, wenn sie nur an ihren beiden Enden gehaltert werden, um sie zu bearbeiten oder zu vermessen. Für diese Zwecke muß daher für diese Wellen eine spezielle Haltevorrichtung vorgesehen werden, durch welche die Welle an einer Vielzahl von Stützpunkten unterstützt wird. Dabei müssen die einzelnen Stützen jeweils von Hand so eingestellt werden, daß die verschiedenen Abschnitte der Welle auf ihren Sollachsen liegen. Dies ist sehr zeitraubend und erfordert viel Erfahrung. Auch bei anderen gestreckten oder flächigen Werkstücken kann es zur präzisen Ausmessung oder zu Bearbeitung notwendig sein, diese so zu lagern, daß die durch Eigengewicht bedingte Verformung in möglichst weitem Ausmaße ausgeräumt ist.

Aus der DE-B-1 174 348 ist eine Vorrichtung zum Vermeiden des Verziehens von Wellen oder dergleichen stabförmigen Körpern beim Induktionshärten bekannt. Diese Vorrichtung umfaßt ein Richtlager, welches durch einen weggesteuerten Kolben eines Hydraulikzylinders bewegbar ist.

Ferner ist aus der FR-A-2 083 018 eine Vorrichtung zur Lagerung sehr großer Behälter bekannt, bei der die den Behälter tragenden Unterlagen unabhängig voneinander hydraulisch eingestellt werden.

Durch die vorliegende Erfindung soll eine Haltevorrichtung gemäß dem Oberbegriff des Anspruches 1 so weitergebildet werden, daß eine einfache, rasche und sichere Einstellung der Abstützung erhalten wird.

Diese Aufgabe ist erfindungsgemäß gelöst durch eine Haltevorrichtung mit den im Anspruch 1 angegebenen Merkmalen.

Bei der erfindungsgemäßen Haltevorrichtung werden die verschiedenen als Servostützen ausgebildeten einstellbaren Stützen automatisch so eingestellt, daß man an den verschiedenen Stützpunkten eine vorgegebene Soll-Stützkraft hat. Dies besorgt eine entsprechende auf die Stützen arbeitende automatische Einstelleinrichtung.

Die an den einzlnen Stützpunkten einzuhaltenden Stützkräfte können im Einzelfalle alle als gleich groß vorgegeben werden, und in diesem Falle erhält man dann eine Halterung des Werkstückes ähnlich dem bei Schwerelosigkeit erhaltenen Zustand. Für spezielle Einsatzmöglichkeiten kann man jedoch auch die Stützkräfte unterschiedlich wählen, um für eine bestimmte Bearbeitung eine gezielte leichte Verformung des Werkstückes hervorzurufen oder festgestellte spannungsbedingte lokale Verformungen durch entsprechend variierte Stützkräfte zu kompensieren.

Vorteilhafte Weiterbildungen der Erfindung sind in Unteransprüchen angegeben.

Stützen, wie sie im Anspruch 2 angegben sind, sind preiswert, robust und mit sehr unterschiedlichem Hub erhältlich.

Mit der Weiterbildung der Erfindung gemäß Anspruch 3 erhält man auf sehr einfache Weise eine Haltevorrichtung bei welcher man an allen Stützpunkten des Werkstückes die gleiche Stützkraft hat.

Mit der Weiterbildung der Erfindung gemäß Anspruch 4 wird erreicht, daß das einstellbare Stützenteil auf hydraulische Weise verriegelt werden kann, um z.B. während eines Meßprozesses erschütterungsbedingte Schwingungen des Werkstückes auf der Haltevorrichtung zu unterbinden, oder um bei einem Bearbeitungsvorgang Reaktionskräfte für ein am Werkstück angreifendes Werkzeug bereitstellen zu können.

Bei einer Haltevorrichtung gemäß Anspruch 5 erfolgt das Freigeben und Festbremsen der einstellbaren Stützenteile zwangsweise gemeinsam.

Eine Haltevorrichtung, wie sie im Anspruch 6 angegeben ist, läßt sich auch bei hohen Umgebungstemperaturen einsetzen, z. B. beim Glühen und Tempern von biegbaren Werkstücken oder beim Vermessen derselben bei hohen Umgebungstemperaturen. Hierbei kann man dann als Arbeitsfluid für die Arbeitszylinder nicht nur ein Gas sondern auch ein flüssiges Metall auswählen, wie im Anspruch 7 angeben, wobei die zwichen den Arbeitszylindern verlaufende Ausgleichsleitung zusätzlich mit einer Begleitheizung versehen ist.

Bei einer Haltevorrichtung gemäß Anspruch 8 kann man auf einfache Weise eine synchrone Höhenverstellung des Werkstückes über die im Druckspeicher befindliche Gasmenge bewerkstelligen.

Verwendet man Arbeitszylinder gemäß Anspruch 9, so erfolgt das Bewegen des einstellbaren Stützenteiles unter geringer Reibung, insbesondere ohne Haftreibung. Dies ist im Hinblick auf ein sehr feines Einstellen dieses Stützenteiles von Vorteil.

Auch ein Stützen-Servomotor, wie er im Anspruch 10 angegeben ist, weist nur geringe Reibung auf. Die Stellung seines Abtriebsteiles läßt sich in weiten Grenzen feinfühlig einstellen.

Bei einer Haltevorrichtung gemäß Anspruch 11 hat man wieder gleiche Stützkraft an den verschiedenen Stützstellen. Eine im wesentlichen über den Hub gleichbleibende Abtriebskraft eines Elektromagneten läßt sich durch entsprechende Wahl der Geometrie des Magnetflusses einstellen.

Bei einer Haltevorrichtung gemäß Anspruch 12 kann man die Stützkraft an den einzelnen Stützpunkten auf einfache Weise präzise, falls gewünscht auch unterschiedlich einstellen.

Bei einer Haltevorrichtung gemäß Anspruch 13 brauchen die steuerbaren Servomotoren der einstellbaren Stützen nur auf geringere Leistung ausgelegt zu sein, da ein Grundteil der Stützkraft durch die Federanordnung bereitgestellt wird.

Dabei erhält man mit einer Federanordnung gemäß Anspruch 14 den Vorteil, daß man Werkstücke sehr unterschiedlichen Gewichtes ohne Änderungen an der Haltevorrichtung gleichermaßen lagern kann.

Bei einer Haltevorrichtung gemäß Anspruch 15 braucht der Servomotor der Stützen jeweils nur kleinen Hub seines Abtriebsteiles aufzuweisen, was z. B. die Verwendung von Membranmotoren ermöglicht, die praktisch reibungsfrei arbeiten, jedoch nur kleinen Hub haben.

Mit der Weiterbildung der Erfindung gemäß Anspruch 16 wird erreicht, daß die einstellbaren Stützenteile nach Einstellen der gewünschten Stützkräfte in der dann erhaltenen Stellung verriegelt werden können, um eine starre Lagerung des Werkstückes für Meßzwecke oder Bearbeitungszwecke zu haben.

Bei einer Haltevorrichtung gemäß Anspruch 17 ist eine Beschädigung von Oberflächen des Werkstückes beim Drehen desselben um seine Achse, z. B. bearbeiteter Oberflächen von Kurbelzapfen und Hauptzapfen einer Kurbelwelle, durch die oberen Enden der Stützen ausgeschlossen.

Mit der Weiterbildung der Erfindung gemäß Anspruch 18 wird das Einsetzen eines Werkstückes in die Haltevorrichtung erleichtert, da die Enden des Werkstückes beim Verstellen der zusätzlich vorgesehenen Führungselemente einfach und ohne visuelle Einzelkontrolle auf die Achse der Haltevorrichtung zentriert werden. Die Führungselemente stellen zugleich eine Sicherung gegen seitliches Abrutschen des Werkstückes von der Haltevorrichtung dar.

Mit der Maßnahme gemäß Anspruch 19 wird erreicht, daß man besondere lokale Unregelmäßigkeiten in der Gestaltung des Werkstückes, die zu stark unterschiedlichem lokalem Gewicht und lokalen Biegemomenten führen, durch entsprechende Werkstück-Zusatzstücke grob vorkompensiert, so daß die dort vorgesehenen Stützen im wesentlichen gleichen Aufbau haben können wie die für den Rest des Werkstückes verwendeten Stützen.

Nachstehend wird die Erfindung anhand von Ausführungsbeispielen unter Bezugnahme auf die Zeichnung näher erläutert. In dieser zeigen:
- Figur 1:: eine seitliche Ansicht eines Transportwagens zum Lagern einer Schiffsdiesel-Kurbelwelle für Meß- und Bearbeitungszwecke;
- Figur 2:: eine Endansicht des Transportwagens nach Figur 1, teilweise geschnitten;
- Figur 3:: einen transversalen Schnitt durch den Transportwagen nach Figur 1 im Bereich einer Hauptzapfen-Abstützstelle;
- Figur 4:: eine seitliche Ansicht einer Hauptzapfen-Stütze des Transportwagens nach den Figuren 1 bis 3, teilweise axial geschnitten;
- Figur 5:: eine seitliche Ansicht eines Transportwagens ähnlich zu dem nach Figur 1, welcher jedoch zum Abstützen der Kurbelwelle an nicht Laufflächen darstellenden Punkten verwendet wird;
- Figur 6:: einen axialen Schnitt durch eine abgewandelte Hauptzapfen-Stütze mit Blockschaltbild für eine elektrische Betriebsschaltung;
- Figur 7:: eine abgewandelte Hauptzapfen-Stütze mit einstellbarer Stützkraft, teilweise axial geschnitten; und
- Figur 8:: einen vertikalen Schnitt durch eine nochmals abgwandelte Stütze mit zugeordneter Betriebsschaltung.

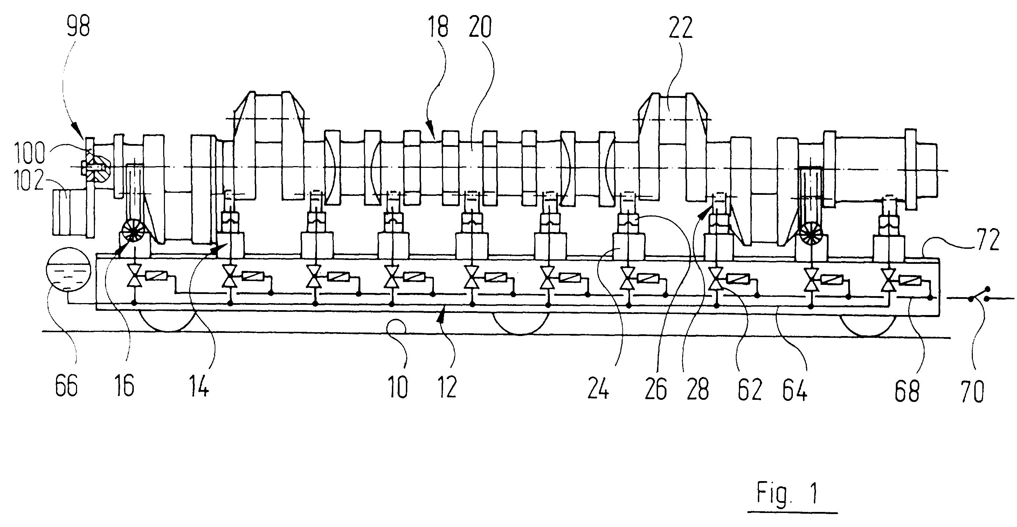

In Figur 1 ist ein auf Schienen 10 laufender Transportwagen insgesamt mit 12 bezeichnet. Auf ihm ruht über insgesamt mit 14 und 16 bezeichneten Stützeinheiten eine insgesamt mit 18 bezeichnete Schiffsdiesel-Kurbelwelle. Letztere hat Hauptzapfen 20 und Kurbelzapfen 22, die auf hohe Oberflächengüte, exakte Rundheit und genaue Ausfluchtung ihrer zylindrischen Lauffläche bearbeitet sind, z. B. durch Finishen.

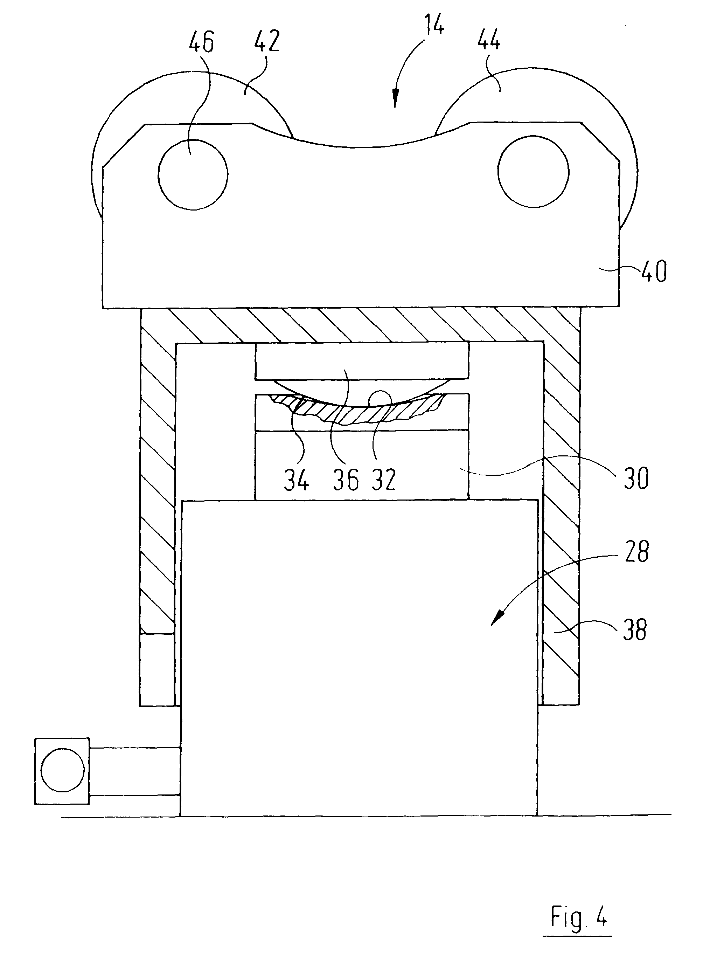

Die mit mittleren Hauptzapfen 20 zusammenarbeitenden einfachen Stützeinheiten 14 haben jeweils ein Basisteil 24, welches auf der Oberseite des Transportwagens 12 in Längsrichtung verschiebbar ist und seinerseits in zur Zeichenebene von Figur 1 senkrechter Richtung einstellbar ein Fußteil 26 trägt, auf welchem ein hydraulischer Arbeitszylinder 28 so angebracht ist, daß seine Kolbenstange 30 in vertikaler Richtung bewegbar ist (vergleiche Figur 4).

Das freie Ende der Kolbenstange 30 ist mit einer sphärischen Vertiefung 32 versehen, in welcher die untere etwas stärker sphärisch gekrümmte Stirnfläche 34 eines Lagerstückes 36 eingreift, das seinerseits ein becherförmiges Abdeckteil 38 trägt. Auf dessen Oberseite sind über einen Lagerbügel 40 zwei Rollen 42, 44 angebracht, welche auf zur Längsachse des Transportwagens 12 parallelen Achsstummeln 46 laufen.

Anstelle von Rollen kann man in Abwandlung auf der Oberseite des Abdeckteiles 38 auch Gummiauflagen vorsehen.

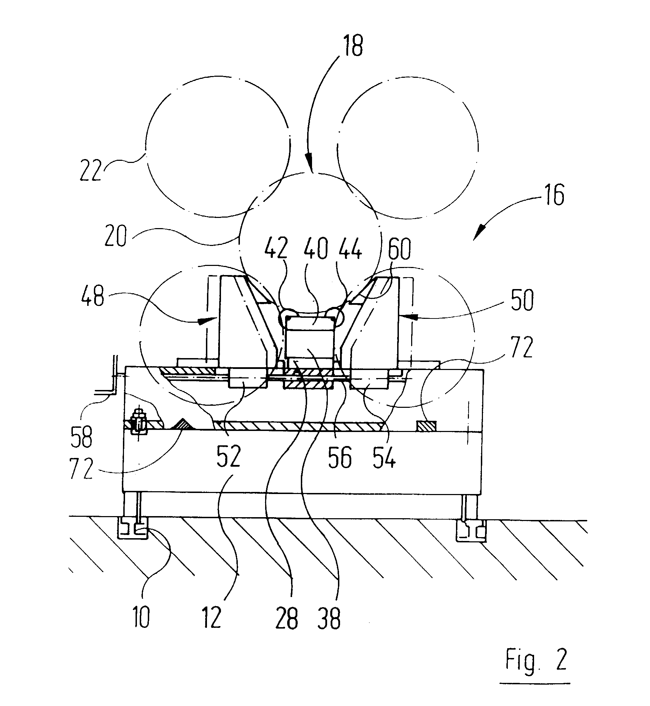

Die Stützeinheiten 16, die mit den außerhalb der endständigen Kurbelzapfen liegenden Hauptzapfen der Kurbelwelle 18 zusammenarbeiten, weisen - wie aus Figur 2 ersichtlich - zusätzlich zwei seitliche Führungsbacken 48, 50 auf, die mit Gewindehülsen 52, 54 auf zwei gegenläufigen Gewindeabschnitten einer Gewindespindel 56 laufen, die im Fußteil 26 gelagert ist und durch ein Handrad 58 betätigbar ist.

Anstelle eines Gewindetriebes kann man zum seitlichen Verstellen der Führungsbacken 48, 50 auch einen Pneumatik- oder Hydraulikzylinder verwenden, ggf. mit Rückmeldung der Ist-Stellung.

Die Führungsbacken 48, 50 tragen bei ihrem oberen innenliegenden Endabschnitt jeweils einen dreieckigen Gleitlagerblock 60, der z. B. aus einem Kunststoffmaterial geringer Reibung hergestellt ist. Durch die über den Rollen 42, 44 der Grund-Stützeinheit liegenden Gleitlagerblöcke 60 erhält man zusammen mit diesen Rollen eine sichere Abstützung der Kurbelwelle 18 auch dann, wenn diese noch nicht exakt auf die Mittelebene des Transportwagens einjustiert ist. Durch Drehen des Handrades 58 in der einen Richtung werden die Gleitlagerblöcke 60 dann synchron zur Mittelebene des Transportwagens 12 bewegt, wodurch die Kurbelwelle 18 automatisch ausgefluchtet wird. Nach diesem Ausfluchten können dann die Führungsbacken 48, 50 durch Drehen des Handrades 58 in entgegengesetzter Richtung wieder von dem Hauptzapfen 20 weggefahren werden, falls gewünscht, so daß dieser über den größten Teil seines Umfanges für Meßzwecke freiliegt. Ansonsten stellen die Führungsbacken 48, 50 zugleich auch eine Sicherung dagegen dar, daß die Kurbelwelle 18 bei Einwirkung externer Kräfte in seitlicher Richtung von den Rollen 42, 44 abrutscht.

Die Arbeitszylinder 28 sind einfach wirkende Arbeitszylinder, deren Arbeitsräume über zugeordnete Magnetventile 62 mit einer Ausgleichsleitung 64 verbindbar sind. An die Ausgleichsleitung 64 ist ein Druckspeicher 66 angeschlossen, der zugleich als Vorratsbehälter für Hydrauliköl dient.

Die Magnete der Magnetventile 62 sind an eine gemeinsame Versorgungsleitung 68 angeschlossen, welche über einen Schalter 70 mit Stromquelle verbindbar ist. Der Schalter 70 kann ein handbetätigter Schalter oder das Relais einer Steuereinheit sein, die das Bearbeitungs- oder Meßzentrum steuert, in welchem der Transportwagen 12 gerade steht.

Bei geöffnetem Schalter 70 sind die Magnetventile 62 durch Federvorspannung in die Schließstellung vorgespannt. Wird der Schalter 70 geschlossen, öffnen die Magnetventile 62 und die verschiedenen Arbeitsräume der Arbeitszylinder 28 sind zusammengeschlossen. Damit herrscht in all diesen Arbeitsräumen derselbe Druck und man erhält an den verschiedenen Stützstellen der Kurbelwelle 18 exakt die gleiche Stützkraft. Nach dieser Formanpassung der durch die verschiedenen von Arbeitszylindern getragenen Rollen 42, 44 gebildeten virtuellen Stützfläche an die Ist-Gestalt der Kurbelwelle kann man dann den Schalter 70 wieder öffnen, so daß die Kurbelwelle 18 nun mit exakt gleicher Stützkraft an den verschiedenen Stützstellen starr gelagert ist. Auf diese Weise kommt es zu keinen Schwingungen der Kurbelwelle 18 beim Bearbeiten (z. B. mit Finish-Köpfen) oder beim Ausmessen der verschiedenen Zapfen-Laufflächen. Damit liegt die Kurbelwelle 18 spannungsfrei und quasi schwerelos in der Haltevorrichtung.

Wird dagegen der Transportwagen 12 dazu verwendet, eine Bearbeitung an der Kurbelwelle 18 durchzuführen, bei welcher mit langfristigen leichten Formänderungen zu rechnen ist, die aufgenommen werden sollen (z. b. Tempern in einem Ofen und anschließendes Abkühlen), so kann man den Schalter 70 für lange Zeitspannen schließen um ein laufendes Ausgleichen der Stützkräfte zu erhalten.

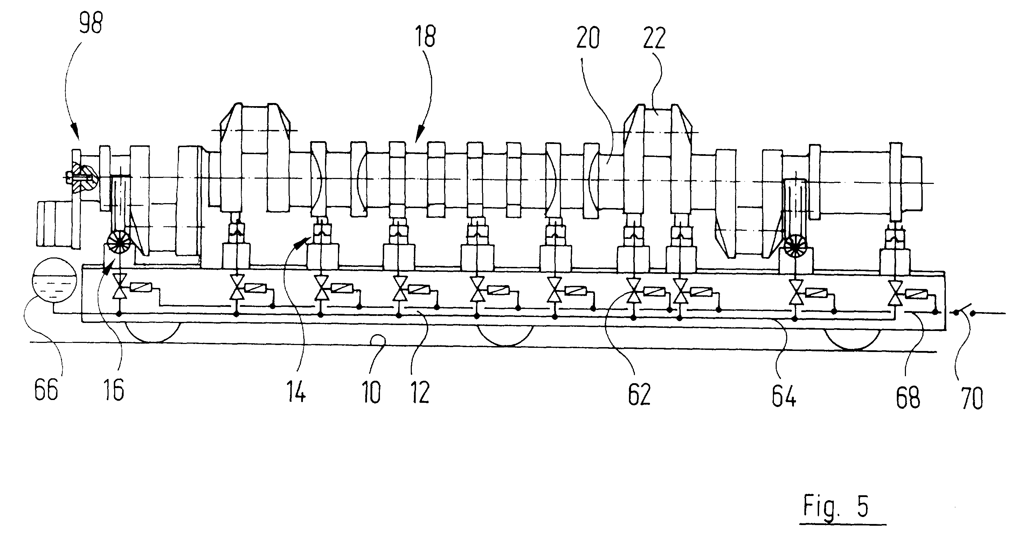

Wie aus der oben gegebenen Beschreibung ersichtlich, erhält man bei der beschriebenen Haltevorrichtung eine Gleichheit der Stützkräfte auch dann, wenn die Kurbelwelle an den einzelnen Stützstellen etwas unterschiedliche Geometrie aufweist. Hiervon kann man auch Gebrauch machen, um die Kurbelwelle an solchen Stellen abzustützen, die überhaupt nicht oder nicht exakt gleich bearbeitet sind. Ein entsprechendes Ausführungsbeispiel zeigt Figur 5. Dort arbeiten nur die Stützeinheiten 16, die zum Einjustieren der Kurbelwelle auf die Mittelebene des Transportwagens 12 dienen, mit Hauptzapfen 20 der Kurbelwelle 18 zusammen, wie oben beschrieben. Die Stützeinheiten 14 arbeiten dagegen mit Kurbelwangen oder Bunden der Kurbelwelle zusammen, so daß die Hauptzapfen 20 (mit Ausnahme der endständigen Hauptzapfen) um den vollen Umfang zur Bearbeitung und zum Vermessen frei zugänglich sind.

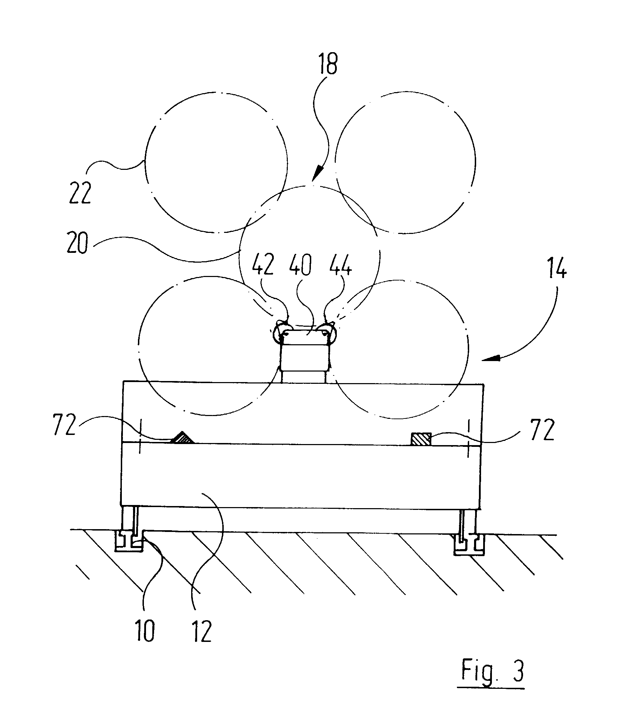

Um das Einstellen der Stützeinheiten 14 und 16 in Längsrichtung des Transportwagens zu erleichtern, sind entsprechende zur Kurbelwellenachse parallele Führungen auf der Wagenoberseite vorgesehen, die in den Figuren 2 und 3 bei 72 angedeutet sind.

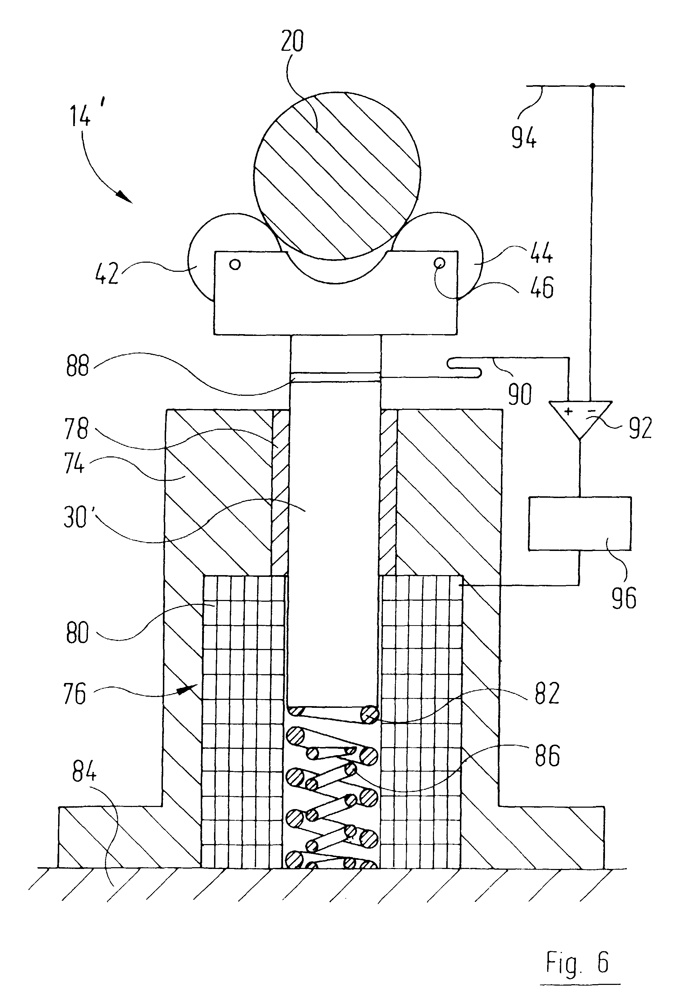

Figur 6 zeigt eine abgewandelte Stützeinheit 14', bei welcher eine einstellbare Stützkraft auf elektromagnetischem Wege erzeugt wird. In die obenliegende Wand 74 eines becherförmigen Gehäuses 76 ist eine Gleitlagerbuchse 78 eingepreßt, in welcher ein Ankerteil 30' geführt ist. Diese durchsetzt unter Spiel eine Ringspule 80, die ebenfalls in Gehäuse 76 angeordnet ist. Die untere Stirnfläche des Ankerteiles 30 ist über eine Schraubenfeder 82 an einem Boden 84 des Gehäuses 76 abgestützt. Innerhalb der Schraubenfeder 82 befindet sich eine zweite, kürzere Schraubenfeder 86, welche nach einem ersten stärkeren Einfedern des Ankerteiles 30' in Eingriff kommt.

In das Ankerteil 30' ist ein schematisch als scheibenförmiges Bauteil wiedergegebener Kraftfühler 88 eingefügt. Dieser ist über eine flexible Leitung 90 mit dem einen Eingang eines Differenzverstärkers 92 verbunden, dessen zweiter Eingang mit einer Sollwertleitung 94 verbunden ist, die ein der gewünschten Stützkraft zugeordnetes elektrisches Signal erzeugt.

Das am Ausgang des Differenzverstärkers 92 erhaltene Fehlersignal wird zur Steuerung eines Speisekreises 96 verwendet, der auf die Ringspule 80 arbeitet. Dabei erhöht der Speisekreis 96 den Spulenstrom so lange, bis ein negatives Fehlersignal verschwunden ist, und erniedrigt ihn, sowie ein positives Fehlersignal erhalten wird.

Dadurch, daß man die Ringspulen 80 der verschiedenen Stützeinheiten 14' an eine gemeinsame Sollwertleitung 94 anschließt, erhält man wieder gleiche Stützkräfte an den verschiedenen Stützstellen der Kurbelwelle.

In Abwandlung kann man auch einige oder Gruppen der Stützeinheiten 14' mit unterschiedlichen Sollwert-Signalen beaufschlagen, um einer unterschiedlichen Gewichtsverteilung der Kurbelwelle Rechnung zu tragen.

Vorzugsweise werden aber derartige lokale Unterschiede in den Gewichten und Biegemomenten dadurch ausgeglichen, daß man an die Kurbelwelle eine Zusatzmasse anschraubt. Eine derartige Zusatzmasse ist in Figur 1 bei 98 angedeutet. Sie besteht aus einem mit dem Ende der Kurbelwelle verschraubbaren Arm 100, auf dem wiederum Gewichtsscheiben 102 lösbar befestigt sind. Die Gewichtsscheiben 102 sind aus einem Satz von Scheiben unterschiedlicher Masse nach den Bedürfnissen des Einzelfalles ausgewählt, wobei die Zusatzmasse 98 insbesondere eine Momentenfreiheit des Wellenendes gewährleisten soll. Beim in Figur 1 rechts gelegenen Wellenende ist dies schon von Hause aus dadurch gewährleistet, daß rechts der rechten Stützeinheit 16 noch ein weiterer Hauptlagerabschnitt folgt. Beim linken Wellenende besorgt die Momentenfreiheit die Zusatzmasse 98.

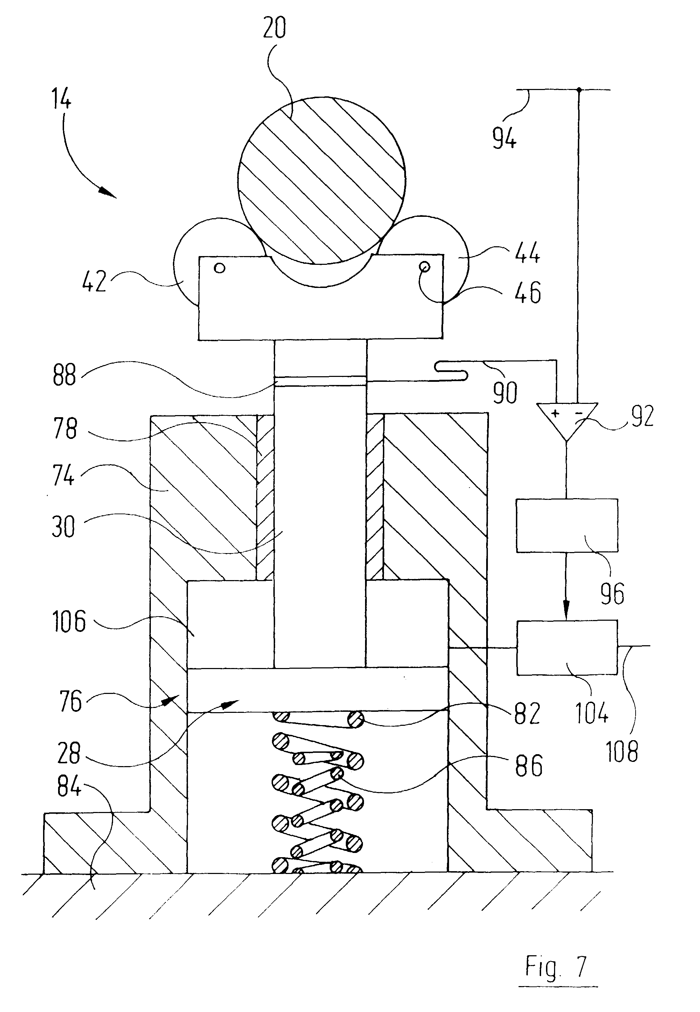

Das Ausführungsbeispiel nach Figur 7 entspricht von der Funktion her weitgehend dem nach Figur 6 mit dem Unterschied, daß die Erzeugung der einstellbaren Stützkraft unter Verwendung eines Druckmittels erfolgt. Das am Ausgang des Differenzverstärkers 92 erhaltene Fehlersignal dient nur zur Steuerung eines Druckreglers 104, über welchen der Arbeitsraum 106 des auf die Kolbenstange 30 arbeitenden Arbeitszylinders 28 mit einer Druckleitung 108 verbunden ist.

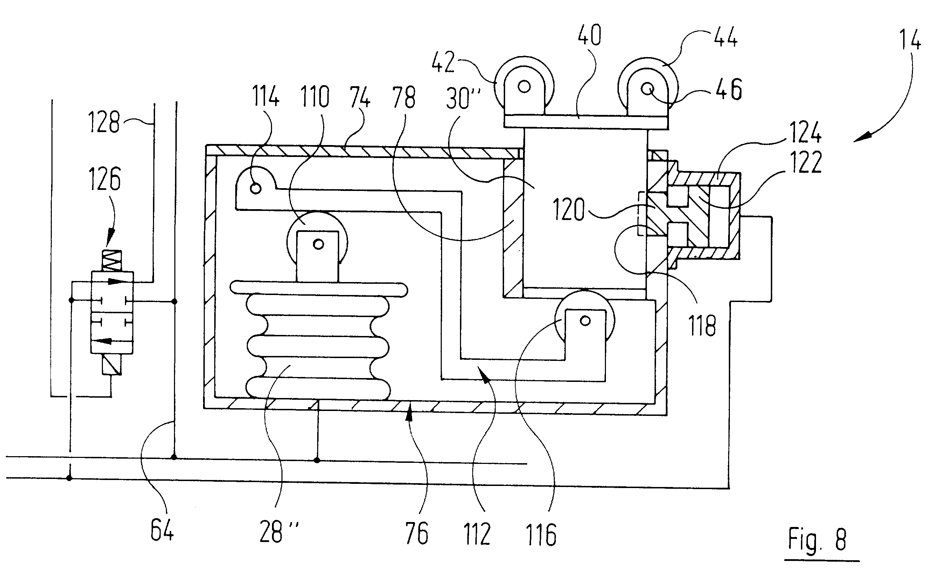

Auch beim Ausführungsbeispiel nach Figur 8 sind Teile, die oben stehend in funktionäquivalenter Form schon beschrieben wurden, wieder mit denselben Bezugszeichen versehen, auch wenn sie sich in Einzelheiten ihrer Geometrie unterscheiden.

Anstelle eines Arbeitszylinders ist ein Balgmotor 28" an die Ausgleichsleitung 64 angeschlossen.

Im Gehäuse 76 ist ein gekröpfter einarmiger Hebel 112 auf einem Schwenkstift 114 angeordnet. Die Rolle 110 greift unter geringem Abstand vom Schwenkstift 114 an der Unterseite des obenliegenden Armabschnittes an, während das freie Ende des untenliegenden Armabschnittes des Hebels 112 eine weitere Rolle 116 trägt, die an der untenliegenden Stirnfläche eines zylindrischen Führungsteiles 30" angreift. Dieses trägt wieder die Rollen 42, 44.

In der Gleitlagerbuchse 78 ist ein Fenster 118 ausgebildet, in welches ein Bremsschuh 120 im Gleitspiel eingreift, der eine zur Außenfläche des Führungsteiles 30" passende Stirnfläche hat. Der Bremsschuh 120 ist mit einem Bremskolben 122 verbunden, der in einem Bremszylinder 124 läuft. Letzterer ist über ein Schaltventil 126 mit der unter Druck stehenden Ausgleichsleitung bzw. einer Rücklaufleitung 128 verbindbar. Durch entsprechendes Erregen des als Magnetventil ausgebildeten Schaltventiles 126 kann man somit das Führungsteil 30" in der jeweils eingestellten Lage fixieren.

Die Bewegungsübersetzung durch den Hebel 112 ermöglicht eine weite Anpassbarkeit der vertikalen Lage der Stützstelle bei nur begrenztem Hub des Stützen-Servomotors, so daß man nach dem gleichen Prinzip anstelle eines Balgmotors auch einen Membranmotor verwenden kann.

Obenstehend wurde die Erfindung in Verbindung mit einem Transportwagen als Unterbau für die verschiedenen Stützeinheiten beschrieben. Es versteht sich, daß man wahlweise auch einen ortsfesten Unterbau verwenden kann, wobei letzterer entweder durch ein versetzbares Gerüst oder durch eine geeignete belastungsfähige Aufstellfläche gebildet sein kann.

## Patentansprüche

1. Haltevorrichtung zur Unterstützung eines langen Werkstücks bei der Bearbeitung, mit einem Unterbau (12) und mit einer auf dem Unterbau (12) angeordneten steuerbaren Servostützenanordnung (14, 16) für das Werkstück (18), die ein feststehendes Stützenteil und ein in vertikaler Richtung einstellbares Stützenteil (30) aufweist, dadurch gekennzeichnet, daß die Servostützenanordnung eine Mehrzahl von Servostützen mit entsprechenden Stützenteilen aufweist und eine Einstelleinrichtung (64; 94) zum Einstellen vorgegebener Stützkräfte an den einzelnen Servostützen (14, 16) vorhanden ist.

2. Haltevorrichtung nach Anspruch 1 dadurch gekennzeichnet, daß die Stützen (14, 16) hydraulische Arbeitszylinder (28) aufweisen.

3. Haltevorrichtung nach Anspruch 2, dadurch gekennzeichnet, daß die Einstelleinrichtung mindestens eine Ausgleichsleitung (64) aufweist, an welche die Arbeitsräume der Arbeitszylinder (28) angeschlossen sind.

4. Haltevorrichtung nach Anspruch 3, dadurch gekennzeichnet, daß die Arbeitsräume der Arbeitszylinder (28) über jeweils ein Schaltventil (62) an die Ausgleichsleitung (64) angeschlossen sind.

5. Haltevorrichtung nach Anspruch 4, dadurch gekennzeichnet, daß die Schaltventile (62) über eine gemeinsame Steuerleitung (68) synchron betätigbar sind.

6. Haltevorrichtung nach einem der Ansprüche 2 bis 5, dadurch gekennzeichnet, daß die Arbeitszylinder aus einem hitzebeständigen Material, z. B. Keramik gefertigt sind.

7. Haltevorrichtung nach Anspruch 6, dadurch gekennzeichnet, daß das Arbeitsfluid der Arbeitszylinder (28) ein flüssiges Metall ist und die Arbeitszylinder (28) und die Ausgleichsleitung (64) mit einer Begleitheizung versehen sind.

8. Haltevorrichtung nach einem der Ansprüche 2 bis 7, dadurch gekennzeichnet, daß das Arbeitsfluid der Arbeitszylinder (28) eine Flüssigkeit ist und an die Ausgleichsleitung (64) ein Druckspeicher (66) angeschlossen ist.

9. Haltevorrichtung nach einem der Ansprüche 2 bis 8, dadurch gekennzeichnet, daß die Arbeitszylinder durch einen Membranzylinder oder einen Balgmotor (28") gebildet sind.

10. Haltevorrichtung nach Anspruch 1, dadurch gekennzeichnet, daß die Stützen (14, 16) Elektromagnete (30', 80) als Servomotoren aufweisen.

11. Haltevorrichtung nach Anspruch 10, dadurch gekennzeichnet, daß die Elektromagnete (30', 80) eine im wesentlichem über den Hub konstante Abtriebskraft erzeugen.

12. Haltevorrichtung nach einem der Ansprüche 2 bis 10, dadurch gekennzeichnet, daß die Stützen (14, 16) einen Kraftfühler (88) aufweisen und die Energiezufuhr zu den Stützen-Servomotoren in Abhängigkeit vom Ausgangssignal dieses Kraftfühlers (88) gesteuert (96) wird.

13. Haltervorrichtung nach Anspruch 12, dadurch gekennzeichnet, daß das einstellbare Stützenteil (30; 30')
über eine Federanordnung (82, 86) am feststehenden Stützenteil vertikal abgestützt ist.

14. Haltevorrichtung nach Anspruch 13, dadurch gekennzeichnet, daß die Federanordnung (82, 86) mehrere wegabhängig in Eingriff kommende Federn umfaßt oder eine Feder mit progressiv anwachsender Federcharakteristik aufweist.

15. Haltevorrichtung nach einem der Ansprüche 1 bis 14, dadurch gekennzeichnet, daß die einstellbaren Stützen (14, 16) ein zwischen das Abtriebsteil ihres Servomotors (28") und das einstellbare Stützenteil (30") eingefügtes Übersetzungsgetriebe (112) aufweisen, welches vorzugsweise durch einen Hebel gebildet ist.

16. Haltevorrichtung nach einem der Ansprüche 1 bis 15, dadurch gekennzeichnet, daß die Stützen (14, 16) jeweils eine auf das einstellbare Stützenteil (30") arbeitende Servobremse (120 bis 124) aufweisen, wobei die Servobremsen vorzugsweise über eine gemeinsame Bremsleitung betätigbar sind.

17. Haltevorrichtung nach einem der Ansprüche 1 bis 16, dadurch gekennzeichnet, daß die Stützen (14, 16) auf einer Linie angeordnet sind und die beweglichen Stützenteile (30") zwei symmetrisch zur Stützenmittelebene angeordnete Rollen (42, 44) tragen.

18. Haltevorrichtung nach Anspruch 17, dadurch gekennzeichnet, daß zwei beabstandete Stützen (16) mit symmetrisch zur Stützenmittelebene in seitlicher Richtung einstellbaren (52 bis 58) Führungselementen (48, 50) versehen sind.

19. Haltevorrichtung nach einem der Ansprüche 1 bis 18, gekennzeichnet durch mindestens eine am Werkstück (18) an solcher Stelle befestigbare Zusatzmasse (98), an welcher das Gewicht des Werkstückes (18) vermindert ist oder durch unregelmäßige Gewichtsverteilung bezüglich einer Stützstelle erzeugte Biegemomente auszugleichen sind.

## Claims

1. Holding apparatus for supporting a long workpiece during machining, having a substructure (12) and having a controllable servo-support arrangement (14, 16) for the workpiece (18), which arrangement is disposed on the substructure (12) and comprises a fixed support part and a vertically adjustable support part (30), characterized in that the servo-support arrangement comprises a plurality of servo-supports having corresponding support parts and an adjusting device (64; 94) is provided for adjusting preset supporting forces at the individual servo-supports (14, 16).

2. Holding apparatus according to claim 1, characterized in that the supports (14, 16) comprise hydraulic working cylinders (28).

3. Holding apparatus according to claim 2, characterized in that the adjusting device comprises at least one compensating line (64), to which the working chambers of the working cylinders (28) are connected.

4. Holding apparatus according to claim 3, characterized in that the working chambers of the working cylinders (28) are connected by in each case one operating valve (62) to the compensating line (64).

5. Holding apparatus according to claim 4, characterized in that the operating valves (62) are operable in synchronism via a common control line (68).

6. Holding apparatus according to one of claims 2 to 5, characterized in that the working cylinders are made of a heat-resistant material, e.g. ceramic.

7. Holding apparatus according to claim 6, characterized in that the working fluid of the working cylinders (28) is a liquid metal and the working cylinders (28) and the compensating line (64) are provided with a tracing heating system.

8. Holding apparatus according to one of claims 2 to 7, characterized in that the working fluid of the working cylinders (28) is a liquid and an accumulator (66) is connected to the compensating line (64).

9. Holding apparatus according to one of claims 2 to 8, characterized in that the working cylinders are formed by a diaphragm cylinder or a bellows-type motor (28").

10. Holding apparatus according to claim 1, characterized in that the supports (14, 16) comprise electromagnets (30', 80) as servomotors.

11. Holding apparatus according to claim 10, characterized in that the electromagnets (30', 80) generate an output force which is substantially constant throughout the stroke.

12. Holding apparatus according to one of claims 2 to 10, characterized in that the supports (14, 16) comprise a force sensor (88) and the energy supply to the support servomotors is controlled (96) in dependence upon the output signal of said force sensor (88).

13. Holding apparatus according to claim 12, characterized in that the adjustable support part (30; 30') is vertically supported via a spring arrangement (82, 86) on the fixed support part.

14. Holding apparatus according to claim 13, characterized in that the spring arrangement (82, 86) comprises a plurality of springs, which come into engagement in dependence upon displacement, or a spring with a progressively accumulating spring characteristic.

15. Holding apparatus according to one of claims 1 to 14, characterized in that the adjustable supports (14, 16) comprise a speed-transforming gear (112), which is inserted between the output part of their servomotor (28") and the adjustable support part (30") and is preferably formed by a lever.

16. Holding apparatus according to one of claims 1 to 15, characterized in that the supports (14, 16) comprise in each case a servo-brake (120 to 124) acting upon the adjustable support part (30"), the servo-brakes preferably being operable via a common brake line.

17. Holding apparatus according to one of claims 1 to 16, characterized in that the supports (14, 16) are disposed in a line and the movable support parts (30") carry two rollers (42, 44), which are disposed symmetrically to the support centre plane.

18. Holding apparatus according to claim 17, characterized in that two spaced-apart supports (16) are provided with guide elements (48, 50), which are adjustable in a lateral direction (52 to 58) symmetrically to the support centre plane.

19. Holding apparatus according to one of claims 1 to 18, characterized by at least one additional mass (98) fastenable to the workpiece (18) at a point where the weight of the workpiece (18) is reduced or where bending moments produced as a result of uneven weight distribution in relation to a support point are to be compensated.

## Revendications

1. Dispositif de retenue destiné à soutenir une longue pièce lors du façonnage, avec une infrastructure (12) et avec une disposition de support assistée (14, 16) pouvant être commandée pour la pièce (18), disposée sur l'infrastructure (12), qui comporte un élément de support fixe et un élément de support (30) pouvant être réglé dans la direction verticale, caractérisé en ce que la disposition de support assistée présente une pluralité de supports assistés avec éléments de support correspondants et en ce qu'il est prévu un dispositif de réglage (64 ; 94) pour régler des forces de support prédéterminées sur les supports assistés respectifs (14, 16).

2. Dispositif de retenue selon la revendication 1, caractérisé en ce que les supports (14, 16) comportent des vérins de travail hydrauliques (28).

3. Dispositif de retenue selon la revendication 2, caractérisé en ce que le dispositif de réglage présente au moins une ligne de compensation (64), à laquelle sont raccordés les espaces de travail des vérins de travail (28).

4. Dispositif de retenue selon la revendication 3, caractérisé en ce que les espaces de travail des vérins de travail (28) sont raccordés à la ligne de compensation (64) par l'intermédiaire d'une soupape de commande (62) respective.

5. Dispositif de retenue selon la revendication 4, caractérisé en ce que les soupapes de commande (62) peuvent être commandées de façon synchronisée par l'intermédiaire d'une ligne de commande commune (68).

6. Dispositif de retenue selon l'une des revendications 2 à 5, caractérisé en ce que les vérins de travail sont réalisés à partir d'un matériau thermorésistant, par ex. en céramique.

7. Dispositif de retenue selon la revendication 6, caractérisé en ce que le fluide de travail des vérins de travail (28) est un métal liquide et en ce que les vérins de travail (28) et la ligne de compensation (64) sont dotés d'un chauffage associé.

8. Dispositif de retenue selon l'une des revendications 2 à 7, caractérisé en ce que le fluide de travail des vérins de travail (28) est un liquide et en ce qu'à la ligne de compensation (64) est relié un accumulateur de pression (66).

9. Dispositif de retenue selon l'une des revendications 2 à 8, caractérisé en ce que les vérins de travail sont constitués par un vérin à membrane ou un moteur à soufflet (28").

10. Dispositif de retenue selon la revendication 1, caractérisé en ce que les supports (14, 16) présentent en tant que servomoteurs des électro-aimants (30', 80).

11. Dispositif de retenue selon la revendication 10, caractérisé en ce que les électro-aimants (30', 80) produisent une force d'entraînement pour l'essentiel constante sur la course.

12. Dispositif de retenue selon l'une des revendications 2 à 10, caractérisé en ce que les supports (14, 16) comportent un capteur de force (88) et en ce que l'alimentation en énergie vers les servomoteurs des supports est commandée en fonction du signal de sortie de ce capteur de force (88).

13. Dispositif de retenue selon la revendication 12, caractérisé en ce que l'élément de support réglable (30 ; 30') s'appuie sur l'élément de support fixe par l'intermédiaire d'une disposition de ressort (82, 86).

14. Dispositif de retenue selon la revendication 13, caractérisé en ce que la disposition de ressort (82, 86) englobe plusieurs ressorts sollicités selon la course ou un ressort avec des caractéristiques de ressort augmentant progressivement.

15. Dispositif de retenue selon l'une des revendications 1 à 14, caractérisé en ce que les supports réglables (14, 16) présentent un élément réducteur (112) placé entre l'élément moteur de leur servomoteur (28' ') et l'élément de support réglable (30' ') qui est de préférence conçu sous forme d'un levier.

16. Dispositif de retenue selon l'une des revendications 1 à 15, caractérisé en ce que les supports (14, 16) présentent respectivement un servofrein (120 à 124) travaillant sur l'élément de support réglable (30"), les servofreins pouvant de préférence être actionnés par l'intermédiaire d'une conduite de frein commune.

17. Dispositif de retenue selon l'une des revendications 1 à 16, caractérisé en ce que les supports (14, 16) sont disposés sur une ligne et en ce que les éléments de support mobiles (30' ') supportent deux rouleaux (42, 44) disposés symétriquement au plan central des supports.

18. Dispositif de retenue selon la revendication 17, caractérisé en ce que deux supports espacés (16) sont dotés d'éléments de guidage (48, 50) pouvant être réglés dans la direction latérale (52 à 58) symétriquement au plan central des supports.

19. Dispositif de retenue selon l'une des revendications 1 à 18, caractérisé en ce qu'au moins une masse supplémentaire (98) peut être fixée à la pièce (18), à l'endroit où le poids de la pièce (18) est réduit ou à l'endroit où les moments de flexion générés par une répartition de poids irrégulière par rapport à un emplacement de support doivent être compensés.
